# EUROPÄISCHE PATENTSCHRIFT

(11) **EP 2 650 197 B1**
(45) Veröffentlichungstag und Bekanntmachung des Hinweises auf die Patenterteilung: **20.09.2017**
(21) Anmeldenummer: 13001746.0
(22) Anmeldetag: 05.04.2013
(51) Int. Cl.: B60N 2/38, B60N 2/14, B60N 2/24, E01C 19/48

(54) **Straßenfertiger sowie Sitzkonsole**
Road finisher and seat console
Finisseur de route et console d'assise

(30) Priorität: 12.04.2012 DE 202012003697 U
(43) Veröffentlichungstag der Anmeldung: 16.10.2013
(73) Patentinhaber: Joseph Vögele AG, 67067 Ludwigshafen (DE)
(72) Erfinder: Herzberg, Ingo, 74918 Angelbachtal (DE)
(74) Vertreter: Grünecker Patent- und Rechtsanwälte PartG mbB

(56) Entgegenhaltungen:
- DE-A1- 2 507 168
- DE-U1- 8 532 254
- US-A- 2 306 891

## Beschreibung

Die Erfindung betrifft einen Straßenfertiger gemäß Oberbegriff des Anspruchs 1.

Aus dem Produktprogramm 2008, Registriernummer 2096421 DE/06.08, Seiten 16, 22, 24, 44 und 51 der Firma Joseph Vögele AG, Neckarauer Straße 168-288, 68146 Mannheim/DE ist es bekannt, den auf der Sitzkonsole angeordneten Bedienersitz mit der Sitzkonsole zwischen unterschiedlichen Arbeitspositionen relativ zu einer Drehlagerung umzustellen, beispielsweise in Fahrtrichtung des Straßenfertigers auszurichten oder über die Seitenbegrenzung des Straßenfertigers hinaus nach außen auszuschwenken. Die jeweilige Arbeitsposition wird durch einen in der Sitzkonsole angeordneten Verriegelungsbolzen durch dessen Eingriff in eine Verriegelungsbolzenaufnahme verriegelt. Der Verriegelungsbolzen wird von Hand aus der Eingriffsstellung in die Lösestellung umgestellt und nach einer Verstellung der Sitzkonsole durch sein Eigengewicht und/oder von Hand wieder in die Eingriffsstellung gebracht. Der Verriegelungsbolzen ist häufig z.B. aufgrund seines Gewichtes und Eingriffs relativ schwergängig, und für den Bediener ergonomisch ungünstig zu handhaben. Steht der Straßenfertiger auf einem Gefälle und/oder mit einer Querneigung, dann belastet die Masse der Sitzkonsole mit dem Bedienersitz den Verriegelungsbolzen in der Eingriffsstellung, so dass dieser nur sehr schwer in die Lösestellung bringbar ist. Auch Verschmutzungen können zum Verklemmen des Verriegelungsbolzens beitragen. Die Handbedienung ist mit Quetsch- oder Verletzungsgefahr verbunden. Die Sitzkonsole mit dem Bedienersitz kann im Übrigen gegebenenfalls mit einem Bedienpult in Querrichtung des Straßenfertigers auf der Führerstands-Plattform verschoben werden.

Bei einer aus US 2 306 891 A bekannten Sitzbasis eines verstellbaren Sitzes eines Transportfahrzeuges, wie eines Flugzeuges oder eines Schienenfahrzeuges, lässt sich zur Drehverstellung des Sitzes um eine Vertikalachse der säulenförmigen Sitzbasis ein Verriegelungsbolzen mittels eines zweiarmigen Umlenkhebels gegen Federkraft aus einer Aufnahmebohrung ausheben. Der Umlenkhebel trägt am längeren Ende ein Pedal zum Betätigen des Umlenkhebels. Das Pedal befindet sich knapp unter der Unterseite des auf der Sitzbasis montierten Sitzes.

Bei einer aus DE 25 07 168 A bekannten, drehbaren Sitzbedienungseinheit ist an der Rückseite des Sitzes ein Handhebel angeordnet, der zum Lösen der Verriegelung nach unten gedrückt werden muss. Sollte das mit der Sitzbedienungseinheit ausgestattete Nutzfahrzeug auf schrägem Untergrund stehen, ist es schwierig, mit der Hand ausreichend große Kräfte ausüben zu können, um den sich dann zum Verklemmen neigenden Bolzen aus der Aufnahme zu lösen.

Aus DE 85 32 254 U1 ist eine Vorrichtung zum Verschwenken eines Einzelsitzes eines Personenkraftwagens bekannt, bei dem zwischen dem Verriegelungsbolzen und einem Handhebel zwei Getriebestufen vorgesehen sind, um durch Drücken des Handhebels nach unten den Bolzen lösen zu können. Dennoch kann es bei schrägstehendem Personenkraftwagen schwierig sein, mit der Hand ausreichend große Kräfte ausüben zu können.

Der Erfindung liegt die Aufgabe zugrunde, einen Straßenfertiger zu schaffen, der bedienerfreundlich und bezüglich der Ergonomie der Bedienersitzverstellung günstiger ist. Die Sinnfälligkeit der Bedienelemente soll verbessert sein.

Die gestellte Aufgabe wird mit den Merkmalen des Anspruches 1 gelöst.

In dem Straßenfertiger erfüllt der Umlenkhebel eine Mehrfachfunktion, da er das Fußpedal am Betätigungsende zumindest zum Umstellen des Verriegelungsbolzens aus der Verriegelungsstellung in die Lösestellung an gut zugänglicher Stelle darbietet, und über seine Hebelwirkung mit moderater Betätigungskraft hohe Umstellkräfte auf den Verriegelungsbolzen aufbringen lässt, so dass dieser auch in verklemmtem Zustand sicher und bequem in die Lösestellung umstellbar ist. Die Bedienung des Umlenkhebels mit seinem Fußpedal ist außerdem sehr sinnfällig, d.h. ohne Überlegungen eines Bedieners möglich. Über das Fußpedal können wesentlich höhere Kräfte als mit der Hand ausgeübt werden, und da ein Bediener nicht nur mit Kraft vorzugehen hat, sondern zumindest einen Teil seines Körpergewichtes einsetzen kann, selbst wenn er sitzend eine Umstellung bei mit außerordentlich niedriger Einbaugeschwindigkeit fahrendem Straßenfertiger vornimmt.

Bevorzugte Ausführungsformen des Straßenfertigers gehen aus den Unteransprüchen hervor.

Anhand der Zeichnungen wird eine Ausführungsform des Erfindungsgegenstandes erläutert. Es zeigen:
- Fig. 1: eine Perspektivansicht eines Teiles einer Führerstands-Plattform eines Straßenfertigers mit einem Bedienersitz in einer Arbeitsstellung,
- Fig. 2: eine Ansicht ähnlich der von Fig. 1, mit dem Bedienersitz in einer anderen Arbeitsposition,
- Fig. 3: eine perspektivische Detailansicht, unter Weglassung von Abdeckungen, einer Verriegelungsvorrichtung und Drehlagerung einer Sitzkonsole, und
- Fig. 4: eine Seitenansicht zu Fig. 3.

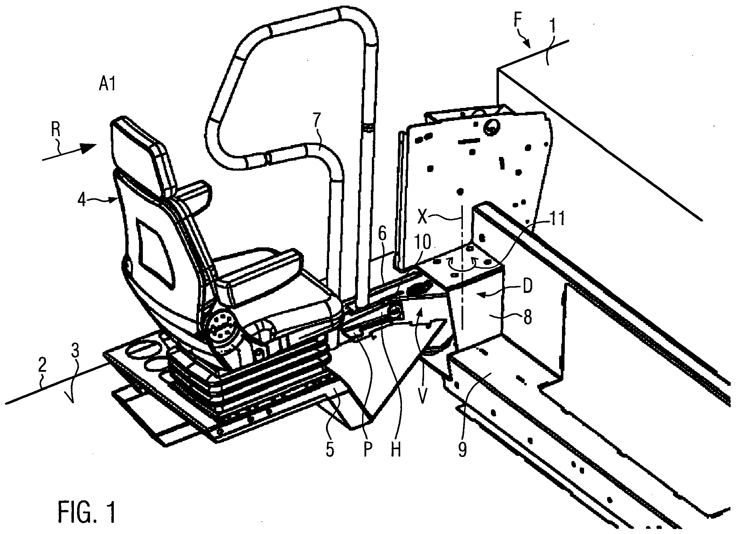

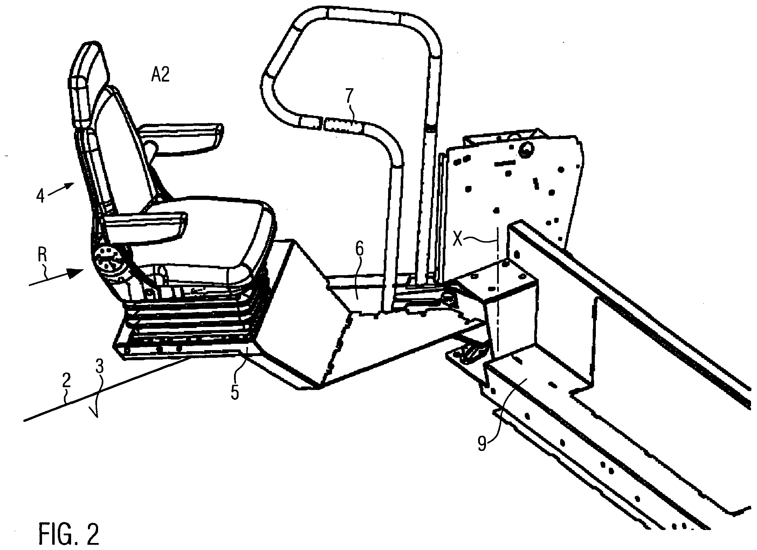

In den Fig. 1 und 2 ist auf einer Führerstands-Plattform 3 eines Chassis 2 eines Straßenfertigers F, beispielsweise hinter einem Primärantriebsaggregat 1, ein Bedienersitz 4 als Teil eines nicht näher hervorgehobenen Bedienstandes in einer ersten Arbeitsposition A1 gezeigt. Der Sitz 4 ist in etwa in Fahrtrichtung R des Straßenfertigers F nach vorne ausgerichtet und befindet sich z.B. innerhalb der Breite der Führerstands-Plattform 3. In Fig. 2 ist der Bedienersitz 4 hingegen in eine weitere, z.B. zweite Arbeitsposition A2 nach außen geschwenkt, so dass er über die seitliche Begrenzung der Führerstands-Plattform 3 hinstellung in die Lösestellung an gut zugänglicher Stelle darbietet, und über seine Hebelwirkung mit moderater Betätigungskraft hohe Umstellkräfte auf den Verriegelungsbolzen aufbringen lässt, so dass dieser auch in verklemmtem Zustand sicher und bequem in die Lösestellung umstellbar ist.

Die Sitzkonsole zeichnet sich durch deutlich verbesserte Bedienbarkeit bei einer Verstellung, verringerte Kräfte selbst bei klemmendem Verriegelungsbolzen sowie eine verbesserte Ergonomie aus. Die Bedienung des Umlenkhebels mit seinem Fußpedal ist außerdem sehr sinnfällig, d.h. ohne Überlegungen eines Bedieners möglich. Über das Fußpedal können wesentlich höhere Kräfte als mit der Hand ausgeübt werden, und da ein Bediener nicht nur mit Kraft vorzugehen hat, sondern zumindest einen Teil seines Körpergewichtes einsetzen kann.

Bevorzugte Ausführungsformen des Straßenfertigers bzw. der Sitzkonsole gehen aus den Unteransprüchen hervor.

Anhand der Zeichnungen wird eine Ausführungsform des Erfindungsgegenstandes erläutert. Es zeigen:
- Fig. 1: eine Perspektivansicht eines Teiles einer Führerstands-Plattform eines Straßenfertigers mit einem Bedienersitz in einer Arbeitsstellung,
- Fig. 2: eine Ansicht ähnlich der von Fig. 1, mit dem Bedienersitz in einer anderen Arbeitsposition,

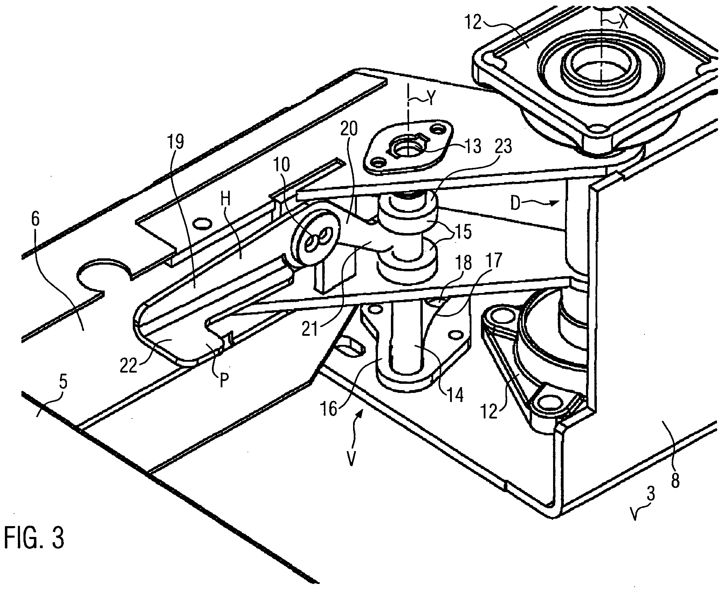

- Fig. 3: eine perspektivische Detailansicht, unter Weglassung von Abdeckungen, einer Verriegelungsvorrichtung und Drehlagerung einer Sitzkonsole, und

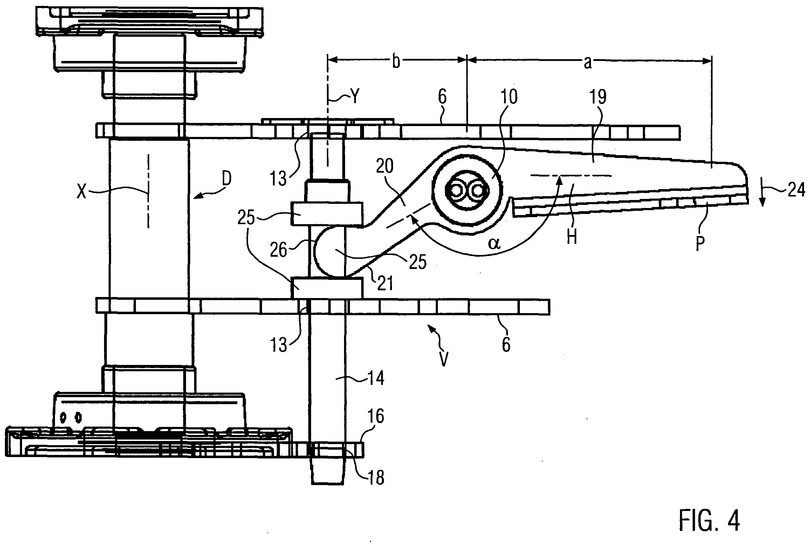

- Fig. 4: eine Seitenansicht zu Fig. 3.

In den Fig. 1 und 2 ist auf einer Führerstands-Plattform 3 eines Chassis 2 eines Straßenfertigers F, beispielsweise hinter einem Primärantriebsaggregat 1, ein Bedienersitz 4 als Teil eines nicht näher hervorgehobenen Bedienstandes in einer ersten Arbeitsposition A1 gezeigt. Der Sitz 4 ist in etwa in Fahrtrichtung R des Straßenfertigers F nach vorne ausgerichtet und befindet sich z.B. innerhalb der Breite der Führerstands-Plattform 3. In Fig. 2 ist der Bedienersitz 4 hingegen in eine weitere, z.B. zweite Arbeitsposition A2 nach außen geschwenkt, so dass er über die seitliche Begrenzung der Führerstands-Plattform 3 hinausragt und schräg gegenüber der Fahrtrichtung R orientiert ist. Der Bedienersitz 4 kann gegebenenfalls in mehr als zwei weitere vorbestimmte Arbeitspositionen gebracht werden.

Der Bedienersitz 4 ist auf einer Sitzkonsole 5 angeordnet und weist darauf gegebenenfalls nicht näher hervorgehobene, weitere Verstellmöglichkeiten auf. Die Sitzkonsole 5 ist mit einer Sitzkonsolen-Auslegerstruktur 6 in einer Drehlagerung D, beispielsweise in Richtung eines Doppelpfeils 11, um eine zur Führerstands-Plattform 3 in etwa vertikale Achse X schwenkbar, und in den Arbeitspositionen, z.B. A1 und A2, mittels einer Verriegelungsvorrichtung V verriegelt. An der Sitzkonsole 5 und/oder der Sitzkonsolen-Auslegerstruktur 6 kann ein seitlicher Sicherheitsbügel 7 montiert sein, der Verstellbewegungen der Sitzkonsole 5 mitmacht. Die Drehlagerung D ist in einer kastenartigen Halterung 8 relativ zur Führerstands-Plattform 3 stationär verbaut, beispielsweise angrenzend an eine Querstruktur 9. Zur Betätigung der Verriegelungsvorrichtung V ist ein Umlenkhebel H vorgesehen, der beispielsweise in einer Schwenklagerung 10 schwenkbar gelagert ist und hier ein an gut zugänglicher Stelle zwischen der Sitzkonsole 5 und der Drehlagerung D bedienbares Fußpedal P aufweist. Der Umlenkhebel H ist hier an der Sitzkonsolen-Auslegerstruktur 6 angeordnet.

In den Fig. 3 und 4 sind von der Drehlagerung D obere und untere Lagerböcke 12 erkennbar, die an der teilweise weggeschnittenen Halterung 8 und somit stationär gegenüber der Führerstands-Plattform 3 montiert sind. In der Sitzkonsolen-Auslegerstruktur 6 sind an oberen und unteren Befestigungsflanschen Schiebeführungen 13 für einen Verriegelungsbolzen 14 vorgesehen, der aus der gezeigten Verriegelungsposition, in der er mit seinem unteren Ende in eine Verriegelungsbolzenaufnahme 18 formschlüssig eingreift (eine Bohrung in einer Kulissenführung 16 mit einem Führungsschlitz 17) und einer nicht gezeigten Lösestellung in Richtung einer Achse Y umstellbar, und zwar mittels des Umlenkhebels H. Am Verriegelungsbolzen 14 ist mindestens ein Anschlag 15, sind vorzugsweise zwei axial beabstandete Ringflansch-Anschläge 15, vorgesehen.

Der Umlenkhebel H ist beispielsweise ein zweiarmiger Hebel mit einem Betätigungsende 19 und einem Umstellende 20, die miteinander um die Schwenklagerung 10 einen stumpfen Winkel α einschließen können, wobei der Wirkhebelarm a des Betätigungsendes 19 bzw. Fußpedals P länger sein kann als ein Wirkhebelarm b des Umstellendes 20. Das Umstellende 20 des Umlenkhebels H weist am freien Ende ein Angriffselement 25 auf, das an dem wenigstens einen Anschlag 15 am Verriegelungsbolzen 14 angreift. Bei einer Betätigung des Fußpedals P in Richtung des Pfeils 24 (niedertreten) greift das Angriffselement 25 am oberen Anschlag 15 an, um den Verriegelungsbolzen 14 aus der gezeigten Eingriffsposition in die nicht gezeigte Löseposition umzustellen, wobei der Verriegelungsbolzen 14 in den Schiebeführungen 13 geführt bleibt. Der Verriegelungsbolzen 14 kann beispielsweise durch eine nicht gezeigte Feder 23 (oder der Umlenkhebel H) vorgespannt sein, zweckmäßig in Richtung zur Eingriffsposition. Wird das Fußpedal P hingegen entgegengesetzt zur Richtung des Pfeils 24 angehoben, dann greift das Angriffselement 25 am unteren Anschlag 15 an, um den Verriegelungsbolzen 14 aus der Lösestellung wieder in die Eingriffsposition zu bringen. Gegebenenfalls fällt der Verriegelungsbolzen 14 unter seinem Eigengewicht (oder Federkraft) selbsttätig in die neue Verriegelungsposition. Das Angriffselement 25 kann eine löffelförmige Verbreiterung 21 mit zumindest teilweise einem Kreisbogen folgendem Außenumriss 26 sein, die gemäß Fig. 3 an nur einer Außenseite des Verriegelungsbolzens 14 zwischen die Anschläge 15 eingreift. Alternativ könnte am Umstellende 20 eine Gabelstruktur mit zwei kongruenten Iöffelförmigen Verbreiterungen als Angriffselemente 25 vorgesehen sein, die dann an beiden gegenüberliegenden Außenseiten des Verriegelungsbolzens 14 zwischen die Anschläge 15 eingreifen. Bei einer weiteren nicht gezeigten Alternative könnte der Verriegelungsbolzen 14 eine Vertiefung oder einen Durchgang aufweisen, in die das Angriffselement 25 eingreift.

Der Umlenkhebel H mit dem Fußpedal P und dem Angriffselement 25 (die löffelförmige Verbreiterung 21) ist zweckmäßig ein einstückiger Stahlblechformteil, der hochkant verbaut ist (Hebelebene senkrecht zur Achse der Schwenklagerung 10) und das Fußpedal P an einer in etwa rechtwinkeligen Abbiegung 22 trägt, so dass der winkelige Querschnitt hohe Eigensteifigkeit besitzt.

## Patentansprüche

1. Straßenfertiger (F), mit einer Führerstands-Plattform (3), auf der wenigstens ein auf einer Sitzkonsole (5) angeordneter Bedienersitz (4) vorgesehen und die Sitzkonsole (5) auf der Führerstands-Plattform (3) zwischen unterschiedlichen, jeweils verriegelten Arbeitspositionen (A1, A2) verstellbar ist, wobei für die Sitzkonsole (5) eine Verriegelungsvorrichtung (V) mit einem Verriegelungsbolzen (14) vorgesehen ist, der zwischen einer Lösestellung und einer Eingriffsstellung relativ zu wenigstens einer die jeweilige Arbeitsposition definierenden Bolzenaufnahme (18) mittels eines beweglich gelagerten Umlenkhebels (H) umstellbar ist, der wenigstens ein Betätigungsende (19) mit einem Fußpedal (P) und ein am Verriegelungsbolzen (14) angreifendes Umstellende (20) aufweist, wobei der Umlenkhebel (H) ein einstückiger Stahlblechformteil ist, dessen Betätigungs- und Umstellende (19, 20) als eine Hebelebene definierende Flachbandstahlarme senkrecht zu einer Achse der Schwenklagerung (10) des Umlenkhebels (H) verbaut sind, und wobei der Umlenkhebel (H) am Betätigungsende (19) das Fußpedal (P) als zur Hebelebene etwa rechtwinkelige Umbiegung (22) aufweist, **dadurch gekennzeichnet, dass** der Umlenkhebel (H) am Umstellende (20) als zur Hebelebene annähernd paralleles Angriffselement (25) entweder wenigstens eine löffelartige Verbreiterung (21) mit einem teilweise einem Kreisbogen folgenden Außenumriss (26) oder zwei kongruente löffelartigen Verbreiterungen (21) in einer Gabelstruktur aufweist, wobei der in Umstellrichtung (Y) verschiebbar geführte Verriegelungsbolzen (14) einen oberen und einen unteren Anschlag (15) für das Umstellende (20) des Umlenkhebels (H) aufweist, zwischen die entweder an nur einer Verriegelungsbolzenaußenseite ein Angriffselement (25) oder an gegenüberliegenden Verriegelungsbolzenaußenseiten beide Angriffselemente (25) der Gabelstruktur des Umlenkhebels (H) eingreifen.

2. Straßenfertiger nach Anspruch 1, **dadurch gekennzeichnet, dass** der Umlenkhebel (H) mit einem stumpfen Winkel (α) zwischen dem Betätigungsende (19) und dem Umstellende (20) gekröpft ist.

3. Straßenfertiger nach Anspruch 1, **dadurch gekennzeichnet, dass** die Anschläge zwei axial beabstandete Ringflansch-Anschläge (15) sind.

4. Straßenfertiger nach einem der vorhergehenden Ansprüche, **dadurch gekennzeichnet, dass** die Sitzkonsole (5) mit einer Konsolen-Auslegerstruktur (6) an der Führerstands-Plattform (3) in einer Drehlagerung (D) um eine in etwa zur Führerstands-Plattform (3) senkrechte Achse (X) verstellbar ist, dass die Schwenklagerung (10) des Umlenkhebels (H) und Schiebeführungen (13) des Verriegelungsbolzens (14) an der Konsolen-Auslegerstruktur (6) angeordnet sind, und dass eine relativ zur Führerstands-Plattform (3) stationäre Kulissenführung (16) mit als Bohrungen ausgeführten Verriegelungsbolzenaufnahmen (18) für den Verriegelungsbolzen (14) vorgesehen ist.

5. Straßenfertiger nach Anspruch 4, **dadurch gekennzeichnet, dass** die Drehlagerung (D) und die Kulissenführung (16) in einer auf der Führerstands-Plattform (3) montierten Halterung (8) verbaut sind.

6. Straßenfertiger nach einem der vorangegangenen Ansprüche, **dadurch gekennzeichnet, dass** der Umlenkhebel (H) und/oder der Verriegelungsbolzen (14) in Umstellrichtung zur Eingriffsstellung federbelastet ist bzw. sind.

7. Straßenfertiger nach einem der vorangegangenen Ansprüche, **dadurch gekennzeichnet, dass** der Verriegelungsbolzen (14) eine Vertiefung oder einen Durchgang zum Eingriff des Angriffselementes (25) am Umstellende aufweist.

## Claims

1. Road finisher (F), comprising an operator's stand platform (3) on which at least one operator's seat (4) arranged on a seat console (5) is provided, the seat console (5) being adjustable on the operator's stand platform (3) between different, respectively locked working positions (A1, A2), wherein a locking device (V) with a lock bolt (14) is provided for the seat console (5), the lock bolt (14) being shiftable by means of a movably mounted pivot lever (H) which comprises both at least one actuating end (19) with a foot pedal (P) and an adjusting end (20) acting on the lock bolt (14) between a disengaged position and an engaged position relative to at least one bolt receptacle (18) defining the respective working position, the pivot lever (H) being an integrally formed part of sheet steel whose adjusting and shifting ends (19, 20) are flat strip steel arms defining a lever plane perpendicular to an axis of a pivot bearing (10) of the pivot lever (H), the pivot lever (H) having the foot pedal (P) at the adjustng end (19) in form of a bend (22) approximately right-angled with respect to the lever plane, **characterized in that** the pivot lever (H) comprises at the adjusting end (20) as an engagement member (25) being approximately parallel with respect to the lever plane either at least one spoon-like widening (21) with an outer contour (26) which partially follows a circular arc, or two congruent widenings (21) in a fork structure, wherein the lock bolt (14) displaceably guided in the adjusting direction (Y) comprises an upper and a lower stop for the adjusting end (20) of the pivot lever (H), between which either one engagement member (25) engages with only one outer side of the lock bolt or both engagement members (25) of the fork structure of the pivot lever (H) engage with opposing outer sides of the lock bolt.

2. Road finisher according to claim 1, **characterized in that** the pivot lever (H) is cranked with an obtuse angle (α) between the actuating end (19) and the adjusting end (20).

3. Road finisher according to claim 1, **characterized in that** the stops are two axially spaced apart ring flange stops (15).

4. Road finisher according to one of the preceding claims, **characterized in that** the seat console (5) is adjustable in a rotary bearing (D) about an axis (X) which is vertical relative to the operator's stand platform (3) and, together with a console cantilever structure (6) on the operator's stand platform (3), that the pivot bearing (10) of the pivot lever (H) and slide guides (13) of the lock bolt (14) are arranged on the console cantilever structure (6), and that a sliding block guide (16) with lock bolt receptacles (18) designed as bores for the lock bolt (14) is provided, which is stationary relative to the operator's stand platform (3).

5. Road finisher according to claim 4, **characterized in that** the rotary bearing (D) and the sliding block guide (16) are installed in a holder (8) mounted on the operator's stand platform (3).

6. Road finisher according to one of the preceding claims, **characterized in that** the pivot lever (H) and/or the lock bolt (14) is/are spring-loaded in the adjusting direction toward the engaged position.

7. Road finisher according to one of the preceding claims, **characterized in that** the lock bolt (14) either comprises a recess or a passage for the engagement of the actuating element (25) provided at the adjusting end of the pivot lever (H).

## Revendications

1. Finisseur de route (F) comprenant une plateforme de poste de conduite (3) sur laquelle est prévu au moins un siège d'utilisateur (4) agencé sur une console de siège (5), et la console de siège (5) est réglable sur la plateforme de poste de conduite (3) entre différentes positions de travail (A1, A2) respectivement verrouillées, finisseur de route
dans lequel il est prévu pour la console de siège (5), un dispositif de verrouillage (V) comprenant une broche de verrouillage (14), qui peut être déplacée entre une position dégagée et une position en prise par rapport à au moins un logement d'accueil de broche (18) respectif définissant la position de travail respective, au moyen d'un levier de renvoi (H) monté mobile, qui comprend au moins une extrémité d'actionnement (19) avec une pédale (P), et une extrémité de déplacement (20) agissant sur la broche de verrouillage (14),
dans lequel le levier de renvoi (H) est une pièce de formage en tôle d'acier d'un seul tenant, dont les extrémités d'actionnement et de déplacement (19, 20) sont réalisées sous forme de bras en feuillard d'acier plat définissant un plan de levier, perpendiculairement à un axe du palier de pivotement (10) du levier de renvoi (H), et
dans lequel le levier de renvoi (H) comporte à son extrémité d'actionnement (19), la pédale (P) sous forme de partie coudée (22) sensiblement à angle droit par rapport au plan de levier,
**caractérisé en ce que** le levier de renvoi (H) présente à son extrémité de déplacement (20), en guise d'élément d'attaque (25) sensiblement parallèle au plan de levier, soit au moins un élargissement (21) en forme de cuillère avec un tracé de contour extérieur (26) suivant partiellement un arc de cercle, soit deux élargissements (21) congruents, en forme de cuillère, agencés selon une structure de fourche, et **en ce que** la broche de verrouillage (14) guidée de manière coulissante dans la direction de déplacement (Y), comporte une butée supérieure et une butée inférieure (15) pour l'extrémité de déplacement (20) du levier de renvoi (H), entre lesquelles s'engagent soit un élément d'attaque (25) sur seulement un côté extérieur de la broche de verrouillage, soit les deux éléments d'attaque (25) de la structure de fourche du levier de renvoi (H), sur deux côtés extérieurs opposés de la broche de verrouillage.

2. Finisseur de route selon la revendication 1, **caractérisé en ce que** le levier de renvoi (H) est coudé avec un angle obtus (α) entre l'extrémité d'actionnement (19) et l'extrémité de déplacement (20).

3. Finisseur de route selon la revendication 1, **caractérisé en ce que** les butées sont deux butées en forme de flasque annulaire (15), espacées axialement.

4. Finisseur de route selon l'une des revendications précédentes, **caractérisé en ce que** la console de siège (5) est réglable, avec une structure de bras de console (6), sur la plateforme de poste de conduite (3), dans un palier de rotation (D), autour d'un axe (X) sensiblement perpendiculaire à la plateforme de poste de conduite (3), **en ce que** le palier de pivotement (10) du levier de renvoi (H) et des guides de coulissement (13) de la broche de verrouillage (14) sont agencés sur la structure de bras de console (6), et **en ce qu'**il est prévu un guidage de coulisse (16) stationnaire par rapport à la plateforme de poste de conduite (3) et comportant des logements d'accueil de broche de verrouillage (18) sous forme d'alésages pour la broche de verrouillage (14).

5. Finisseur de route selon la revendication 4, **caractérisé en ce que** le palier de rotation (D) et le guidage de coulisse (16) sont installés dans un support (8) monté sur la plateforme de poste de conduite (3).

6. Finisseur de route selon l'une des revendications précédentes, **caractérisé en ce que** le levier de renvoi (H) et/ou la broche de verrouillage (14) est ou sont chargés par ressort vers la position en prise.

7. Finisseur de route selon l'une des revendications précédentes, **caractérisé en ce que** la broche de verrouillage (14) présente un creux ou un passage pour la venue en prise de l'élément d'attaque (25) à l'extrémité de déplacement.
